# EUROPÄISCHE PATENTSCHRIFT

(11) **EP 0 857 599 B1**
(45) Veröffentlichungstag und Bekanntmachung des Hinweises auf die Patenterteilung: **17.10.2001**
(21) Anmeldenummer: 98100519.2
(22) Anmeldetag: 14.01.1998
(51) Int. Cl.: B60J 10/00, B62D 65/00

(54) **Arbeitsverfahren zur Anordnung eines Dichtstreifens an einem Flansch einer Schiebedachöffnung oder ähnlichen Karosserieöffnungen und Vorrichtung zu seiner Durchführung.**
Method for fitting a sealing strip to a flange of a sliding-roof opening or similar body openings and device for carrying out such a method.
Procédé de fixation d'une bande d'étanchéité sur un rebord d'une ouverture de toit ou ouvertures de carrosseire similaires et dispositif de mise en oeuvre de ce procédé.

(30) Priorität: 05.02.1997 DE 19704327
(43) Veröffentlichungstag der Anmeldung: 12.08.1998
(73) Patentinhaber: Bayerische Motoren Werke Aktiengesellschaft, 80788 München (DE)
(72) Erfinder: Rehmböck, Josef, 94431 Pilsting (DE); Pöschl, Helmuth, 94436 Simbach (DE)

(56) Entgegenhaltungen:
- EP-A- 0 110 156
- EP-A- 0 503 992
- DE-C- 19 521 061
- FR-A- 2 644 093
- GB-A- 2 244 302

## Beschreibung

Die Erfindung bezieht sich nach dem Oberbegriff des Patentanspruches 1 auf ein Arbeitsverfahren zur Anordnung eines Dichtstreifens an einem Flansch einer Schiebedachöffnung oder ähnlichen Karosserieöffnungen und weiter nach den Unteransprüchen auf eine Vorrichtung zur Durchführung des Arbeitsverfahrens.

Ein derartiges Arbeitsverfahren zur Anordnung eines Dichtstreifens an einem Werkstück ist beispielsweise aus der DE 29 15 282 A bekannt, wobei der Dichtstreifen mittels Relativbewegung zwischen Werkstück und einer Applikationseinrichtung zum automatischen Zuführen, Positionieren, Andrücken und Ablängen des auf einer Vorratsrolle bevorrateten Dichtstreifens auf dem Werkstück angeordnet wird, wobei die an einem Gestell der Applikationsvorrichtung relativ zum Werkstück höheneinstellbar angeordnete und mit einer Andrückrolle ausgerüstete Applikationseinrichtung zum Positionieren des Dichtstreifens gesteuert vom Werkstück beabstandet angeordnet wird.

Das vorbeschriebene Arbeitsverfahren wird in einer ortsfest ausgebildeten Applikationsvorrichtung durchgeführt, wobei das Werkstück zur Anordnung des Dichtstreifens relativ zur Applikationseinrichtung bewegt ist.

Aus der DE 42 43 989 C ist eine handgeführte Vorrichtung zum Anbringen einer selbstklebenden Dichtung am Flansch einer Karosserieöffnung bekannt, bei der im Gegensatz zum vorgenannten automatischen Arbeitsverfahren bestimmte Arbeitsschritte in zeitaufwendiger Weise bei nicht unerheblichem Beschnittabfall von Hand durchzuführen sind.

Der Erfindung liegt die Aufgabe zugrunde, das vorbeschriebene Arbeitsverfahren zur Applikation eines Dichtstreifens an einem Flansch einer Karosserieöffnung weiter zu automatisieren, um bei großer Prozeßsicherheit eine hohe Qualität der Dichtstreifen-Applikation zu erzielen.

Diese Aufgabe ist mit dem Patentanspruch 1 dadurch gelöst, daß der zugeführte, auf eine Schutzabdeckung geklebte Dichtstreifen im Nahbereich der Andrückrolle gesteuert erfaßt wird und auf einem Umfangsabschnitt der Andrückrolle bis zum Erreichen ihrer Andrückposition am Flansch der Schiebedachöffnung aufgelegt wird und daß der mittels der anschließend motorisch relativ zum Flansch bewegten Applikationseinrichtung angeordnete Dichtstreifen von der Schutzabdeckung getrennt wird und in verrundeten Öffnungsabschnitten auf dem Flansch durch Stauchen des Dichtstreifens angeordnet wird, ferner daß der Dichtstreifen mit Erreichen des Dichtstreifen-Anfanges durch die Applikationseinrichtung signalgesteuert auf Länge abgeschnitten wird, wobei die Stoßstelle des Dichtstreifens überrollt und anschließend der auf dem Flansch angeordnete Dichtstreifen durch die rückwärts bewegte Applikationseinrichtung über den Schiebedach-Öffnungsumfang bis zum Ausgangspunkt der ersten Andrückposition mit erhöhtem Anpreßdruck nachgerollt wird.

Der im ersten Kennzeichenmerkmal beschriebene Verfahrensschritt, den zugeführten Dichtstreifen im Nahbereich der Andrückrolle gesteuert zur Auflage auf einem Umfangsabschnitt der Andrückrolle zu erfassen, ist per se aus der GB 2 227 779 A bekannt. Demgegenüber neu ist jedoch die Auflage am Umfangsabschnitt der Andrückrolle lediglich bis zum Erreichen ihrer Andrückposition am Flansch einer Schiebedachöffnung in der Karosserie vorzusehen, womit in vorteilhafter Weise ein durch Kleben angeordneter Dichtstreifen bereits mit seinem Anfangsabschnitt korrekt auf dem Flansch angeordnet ist und somit ein nachteiliges Abstehen dieses Dichtungsstreifen-Anfanges vom Flansch sicher vermieden ist.

Der im zweiten Kennzeichenmerkmal beschriebene Verfahrensschritt, den Dichtstreifen in verrundeten Öffnungsabschnitten auf dem Flansch materialgestaucht anzuordnen, ist per se aus der EP 0 253 599 A bekannt, und zwar für in ihrer Länge auf den Umfang der Karosserie abgestimmte einen geschlossenen Ring bildende Dichtstreifen, die mittels eines U-förmigen Profils auf einen Flansch aufgesteckt werden. Im Gegensatz zu einem in einer Karosserieöffnung aufsteckbar gestalteten Dichtstreifen und damit gegebenen Toleranzausgleich ist ein auf einen Flansch flach aufzuklebender Dichtstreifen in jedem verrundeten Öffnungsabschnitt individuell materialgestaucht anzuordnen. Um trotz der individuell gestauchten Dichtstreifen jeweils eine dichte Stoßstelle zu erreichen, wird gemäß den Kennzeichenmerkmalen 3 und 4 der Dichtstreifen mit Erreichen des Dichtstreifen-Anfanges durch die Applikationseinrichtung signalgesteuert auf Länge abgeschnitten und die Stoßstelle mehrfach mittels der Andrückrolle der Applikationseinrichtung überrollt. Das rückwärtige Überrollen der Stoßstelle durch die Applikationseinrichtung kann vorteilhaft fortgesetzt werden über den gesamten Schiebedach-Öffnungsumfang mit erhöhtem Anpreßdruck zur vergleichmäßigten Anpassung des geklebten Dichtstreifens an den Flansch der Karosserieöffnung.

Mit den erfindungsgemäß zusätzlich kombinierten Arbeitsverfahrens-Schritten ist insgesamt ein Arbeitsverfahren mit großer Prozeßsicherheit und hoher Qualität in der Applikation eines geklebten Dichtstreifens erzielt.

Zur Durchführung des erfindungsgemäßen Arbeitsverfahrens ist in den Ansprüchen 2 mit 5 eine Applikations-Vorrichtung beschrieben, deren Ausbildung in vorteilhafter Weise eine Anordnung in einer Fertigungsstraße für Karosserien, insbesondere PKW-Karosserien ermöglicht. Die erfindungsgemäße Applikations-Vorrichtung umfaßt einen auf die Karosserie bzw. das PKW-Dach absenkbaren Rahmen zur Führung eines gesteuert angetriebenen Fahrwagens, an dem eine Applikationseinrichtung angeordnet ist zur Durchführung sämtlicher im Anspruch 1 genannter Arbeitsverfahrens-Schritte. Die Applikations-Vorrichtung ist dabei so gestaltet, daß die Applikationseinrichtung den Dachwölbungen in Fahrzeugquer- und Fahrzeuglängsrichtung folgend geführt ist und zusätzlich einen vorzugsweise selbstklebenden Dichtstreifen relativ zum Rand der Schiebedach-Öffnung höhengenau am Flansch appliziert. Zur automatischen Durchführung der verschiedenen Arbeitsverfahrens-Schritte ist die Applikationsvorrichtung programmgesteuert, wobei verschiedene Sensoren an der Applikationseinrichtung der genauen Festlegung der Länge des Dichtstreifens sowie der Erkennung eines nicht zum Verbau geeigneten Dichtstreifen-Abschnittes dienen.

Ein derartiger Abschnitt ergibt sich durch die Kupplung von Dichtstreifen zweier Vorratsrollen, wobei jede Vorratsrolle in einem von der Applikationsvorrichtung baulich getrennt ortsfest angeordneten Speicher vorgesehen ist. Der Speicher ist mit einer für die entlang der Schiebedach-Öffnung bewegten Applikationseinrichtung dienenden Ausgleichseinrichtung sowie mit einem Längenpuffer ausgestattet. Dieser ermöglicht ein kontinuierliches Weiterarbeiten der Applikationsvorrichtung insbesondere in der Zeit, in der das Ende des einen Dichtstreifens mit dem Anfang des Dichtstreifens einer neuen Vorratsrolle miteinander fest verklebt und durch einen Farbstreifen bzw. Marker versehen wird. Mittels dieses Farbstreifens wird der für eine Verbauung nicht geeignete Dichtstreifen-Abschnitt erkannt ausgesondert.

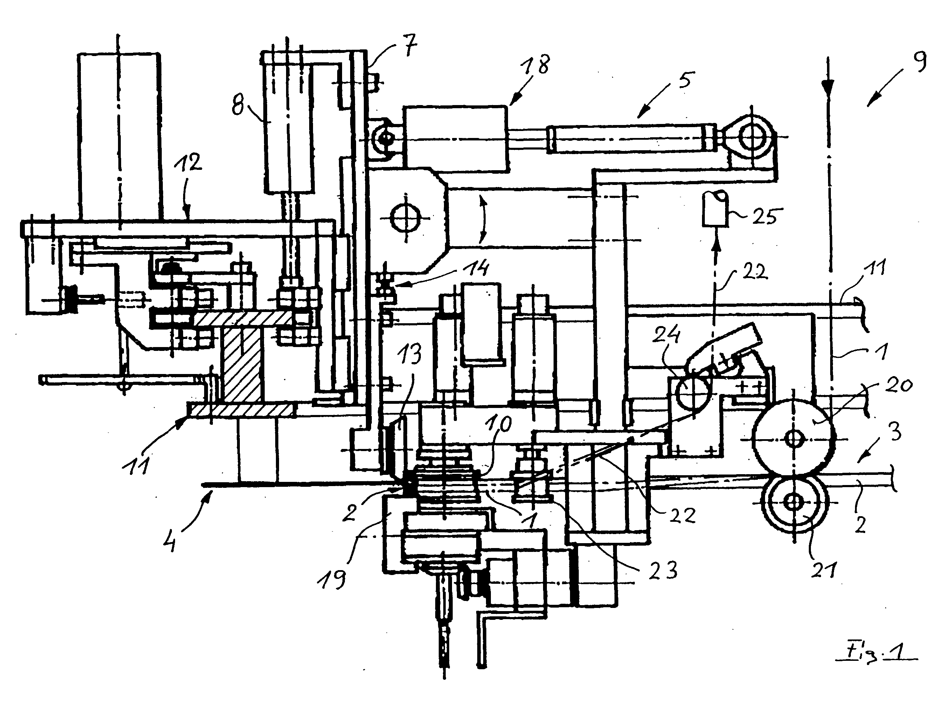

Die Erfindung ist anhand eines in der Zeichnung dargestellten Ausführungsbeispiels einer Applikations-Vorrichtung zur Durchführung des erfindungsgemäßen Arbeitsverfahrens zur Anordnung eines Dichtstreifens beschrieben. Es zeigt
- Figur 1: eine Applikations-Vorrichtung im Einsatz zur Anordnung eines Dichtstreifens an einem Flansch einer Schiebedach-Öffnung einer Karosserie,

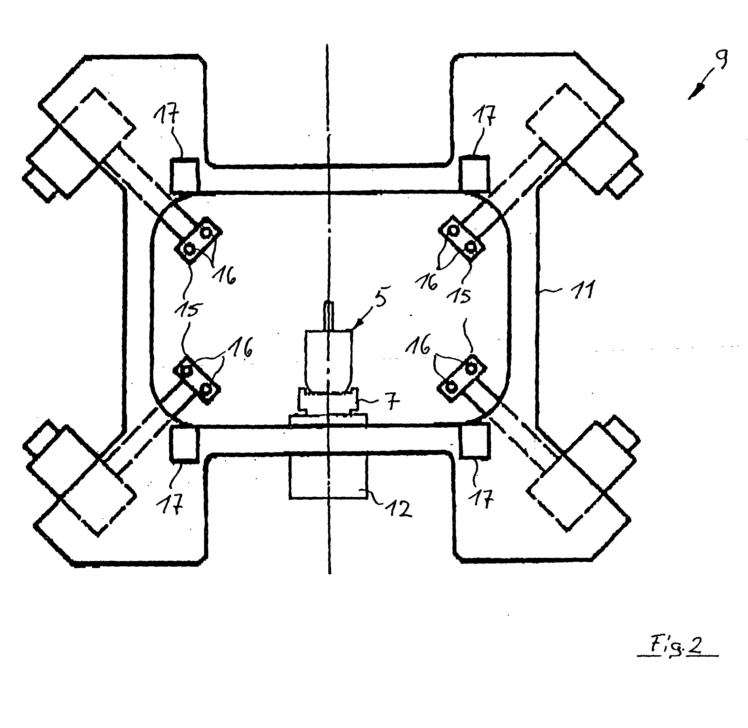

- Figur 2: einen der Schiebedach-Öffnung zuordbaren Rahmen der Applikations-Vorrichtung zum Verfahren der Applikationseinrichtung längs der Schiebedach-Öffnung, von unten gesehen
- Figur 3: einen von der Applikations-Vorrichtung baulich getrennten Speicher mit einer Vorratsrolle für den Dichtstreifen zur endlosen Zuführung zur Applikationseinrichtung.

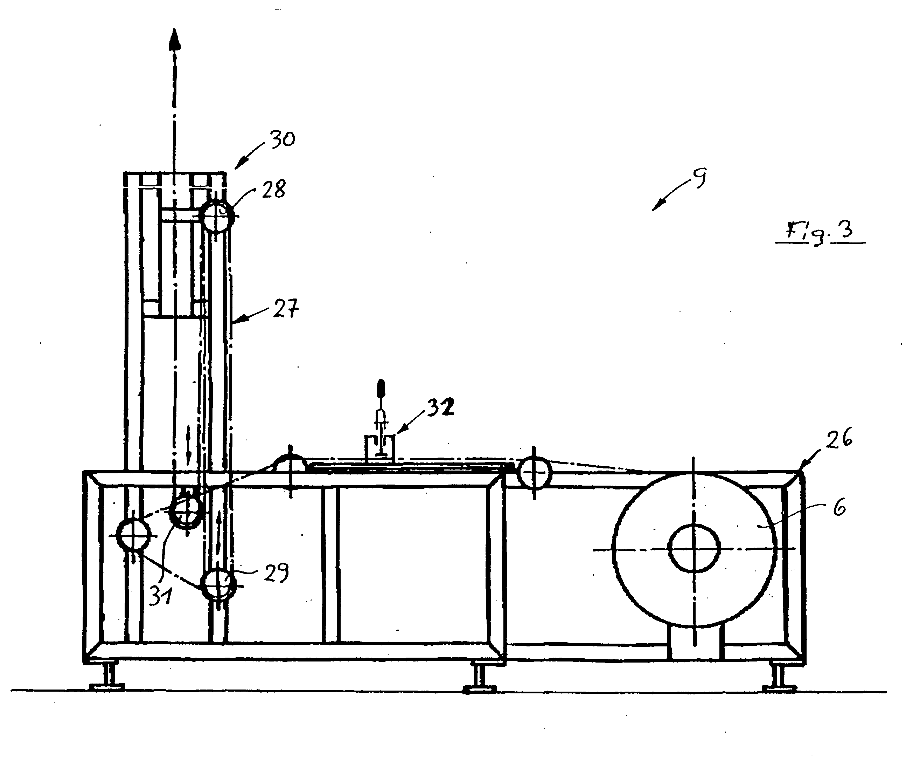

Zur Durchführung des erfindungsgemäßen Arbeitsverfahrens zur Applikation eines Dichtstreifens 1 an einem Flansch 2 einer Schiebedachöffnung 3 in der Karosserie 4 ist eine relativ zum Flansch 2 beweglich angeordnete Applikationseinrichtung 5 zum automatischen Zuführen, Positionieren, Andrücken und Ablängen des auf einer Vorratsrolle 6 (Figur 3) bevorrateten Dichtstreifens 1 vorgesehen, wobei die an einem Gestell 7 der Applikationsvorrichtung 9 relativ zum Flansch 2 höheneinstellbar angeordnete und mit einer Andrückrolle 10 ausgerüstete Applikationseinrichtung 5 zum Positionieren des Dichtstreifens 1 gesteuert vom Flansch 2 beabstandet wird.

In der vom Flansch 2 mittels der Kolben-Zylinder-Einheit 18 beabstandeten, nicht gezeigten Position der Applikationseinrichtung 5 wird der zugeführte Dichtstreifen 1 im Nahbereich der Andrückrolle 10 gesteuert erfaßt zur Auflage über einen Umfangsabschnitt der Andrückrolle 10 bis zum Erreichen ihrer Andrückposition am Flansch 2 der Schiebedachöffnung 3 in der Karosserie 4 der zum Flansch 2 zurückgeführten Applikationseinrichtung 5. Der am Flansch 2 durch Kleben angeordnete Dichtstreifen 1 ist somit mit seinem Anfang punktgenau fixiert.

Anschließend wird der mittels gesteuert motorisch bewegter Applikationseinrichtung 5 relativ zum Flansch 2 geklebt angeordnete Dichtstreifen 1 in verrundeten Öffnungsabschnitten der Schiebedachöffnung 3 auf dem Flansch 2 materialgestaucht angeordnet, was einerseits durch eine relativ zur Fahrgeschwindigkeit der Applikationseinrichtung 5 unterschiedliche Drehzahl der Andrückrolle 10 oder durch eine der Kurvengeschwindigkeit der Andrückrolle 10 angepaßte Drehzahl mit einem demgegenüber schneller zugeführten Dichtstreifen, der vor der Andrückrolle einen Wellenbuckel bildet, erzielt ist.

Mit der in den verrundeten Öffnungsabschnitten gestauchten Anordnung des Dichtstreifens 1 ist sichergestellt, daß dieser sich bei unterschiedlichen Temperaturen nicht vom verrundeten Flansch in den Öffnungsabschnitten löst.

Vor Abschluß der Umrundung der Schiebedachöffnung 3 wird der Dichtstreifen 1 mit Erreichen des Dichtstreifenanfanges durch die Applikationseinrichtung 5 signalgesteuert auf Länge abgeschnitten und die Stoßstelle des Dichtstreifens 1 in üblicher Fahrtrichtung und entgegengesetzt dazu überrollt. Im Anschluß an die rückwärts gerichtete Überrollung der Stoßstelle wird der auf dem Flansch 2 angeordnete Dichtstreifen 1 durch die die Schiebedachöffnung 3 in entgegengesetzter Richtung umfahrende Applikationseinrichtung 5 bis zum Ausgangspunkt der ersten Andrückposition mit erhöhtem Anpreßdruck nachgerollt.

Mit der erfindungsgemäßen Kombination der vorgenannten Verfahrensschritte ist bei großer Prozeßsicherheit eine hohe Qualität in der Applikation des Dichtstreifens 1 am Flansch 2 der Schiebedachöffnung 3 in der Karosserie 4 erzielt.

Zur Erzielung der Relativbewegung der Applikationseinrichtung 5 relativ zum Flansch 2 umfaßt die Applikations-Vorrichtung 9 einen zur Schiebedachöffnung 3 ausrichtbaren Rahmen 11 zur Führung eines gesteuert angetriebenen Fahrwagens 12, der mit einem Gestell 7 zur gesteuert schwenkbeweglichen Anordnung der Applikationseinrichtung 5 quer zum Flansch 2 ausgerüstet ist. Eine vom Flansch 2 entfernte Schwenkposition der Applikationseinrichtung 5 dient zum einen der gesteuerten Auflage des Dichtstreifens 1 auf einem Umfangsabschnitt der Andrückrolle 10 vor dem Start eines Applikationsvorganges und zum anderen zum Auswurf eines für die Applikation ungeeigneten Dichtstreifenabschnittes.

Weiter sind das Gestell 7 und die Applikationseinrichtung 5 über eine einstellbare Gegengewichtskraft, z.B. Hubzylinder 8, gewichtsreduziert mittels einer im Randbereich der Schiebedachöffnung 3 auf der Karosserie 4 aufgesetzten Tastrolle 13 gesteuert höhenbeweglich am Fahrwagen 12 angeordnet, wobei zur höhengenauen Applikation des Dichtstreifens 1 am Flansch 2 relativ zum oberen Rand der Schiebedachöffnung 3 zwischen der Tastrolle 13 und dem Gestell 7 eine Höheneinstellung 14 vorgesehen ist, die beispielsweise mittels eines Schraubbolzens verwirklicht ist.

Die oberhalb der Karosserie - nicht gezeigt - absenkbar angeordnete Applikations-Vorrichtung 9 ist mit einem Rahmen 11 ausgerüstet, der beim Absenken über am Flansch 2 der Schiebedachöffnung 3 anliegende Anschlagelemente 15 mit Stiften 16 ausgerüstet auf der Karosserie 4 über Stützen 17 kraft- und reibschlüssig positioniert ist, wobei die Anschlagelemente 15 nach der Rahmen-Positionierung aus dem Bewegungsbereich des Fahrwagens 12 automatisch motorisch entfernt sind.

Mit der Rückschwenkung der Applikationseinrichtung 5 über die Kolben-Zylinder-Einheit 18 in Andrückposition am Flansch 2 untergreift eine Führungsrolle 19 den Flansch 2 der Schiebedachöffnung 3, wobei die Führungsrolle 19 in Verbindung mit der am Gestell 7 in Fahrtrichtung kippbeweglich gelagerten Applikationseinrichtung 5 deren Nachführung zur Dachwölbung dient. Zugleich ist ein vorzugsweise selbstklebender Dichtstreifen 1 mit einer Schutzabdeckung (Liner) über die Tastrolle 13 relativ zum Rand der Schiebedachöffnung 3 eingestellt mittels der Andrückrolle 10 auf dem Flansch 2 plaziert, wobei der von der Vorratsrolle 6 mittels diametral angeordneter Förderrollen 20, 21 der Andrückrolle 10 zugeführte Dichtstreifen über eine dem Abziehen der Schutzabdeckung (Liner 22) dienende Umlenkrolle 23 geführt ist. Die mittels der Umlenkrolle 23 vom Dichtstreifen 1 entfernte Schutzabdeckung 22 ist über eine Abzugsrolle 24 einem Vakuum-Absaugrohr 25 zur Abfallsammlung zugeführt.

In weiterer Ausgestaltung weist die Applikationseinrichtung 5 in Fahrtrichtung des Dichtstreifen-Auftrages von der Andrückrolle 10 beabstandet einen Sensor (nicht gezeigt) auf zur Erfassung des Dichtstreifen-Anfanges gegen Auftragsende, wobei der nicht gezeigte Sensor zum Ablängen des Dichtstreifens 1 eine zwischen der Liner-Umlenkrolle 23 und der Andrückrolle 10 angeordnete, nicht dargestellte Schneideinrichtung aktiviert.

Zur Erzielung eines leichten Aufbaus des auf die Karosserie 4 absenkbaren Teils der Applikationsvorrichtung 9 weist diese eine baulich getrennt in einem ortsfesten Speicher 26 vorgesehene Vorratsrolle 6 auf, wobei der von der Vorratsrolle 6 ablaufende Dichtstreifen 1 mittels zumindest einer Umschlingung 27 zweier beabstandet angeordneter Rollen 28, 29 entsprechend der für eine Schiebedach-öffnung 3 erforderlicher Länge gepuffert ist. Im Anschluß an diesen Längenpuffer 30 des Speichers 26 ist der Dichtstreifen 1 über eine die Fahrbewegungen der Applikationseinrichtung 5 ausgleichende Spannrolle 31 der Applikationseinrichtung 5 zugeführt.

In weiterer Ausgestaltung weist der Speicher 26 zwischen der Vorratsrolle 6 und dem Längenpuffer 30 eine zum Fixieren des Dichtstreifens 1 dienende Klemmeinrichtung 32 auf, wobei das geklemmt fixierte, vorratsrollenseitige Ende des Dichtstreifens 1 mit dem Anfang des Dichtstreifens einer ausgetauschten Vorratsrolle 6 fest verbunden und durch einen Marker (Farbstreifen) bestimmt ist. Während des Handlings zur Dichtstreifen-Verbindung ist bei aktiver Applikationseinrichtung 5 die erforderliche Dichtstreifenlänge aus dem Längenpuffer 30 entnommen, wobei die erforderliche Dichtstreifenlänge über zumindest eine verschiebebeweglich angeordnete Rolle 28 oder 29 gewonnen ist.

Schließlich umfaßt die Applikationsvorrichtung 9 einen in der Zuführung des Dichtstreifens 1 vorgesehenen ersten, nicht gezeigten Sensor, dem im Abstand der Dichtstreifenlänge zwischen der Schneideinrichtung und der Andrückrolle 10 der Applikationseinrichtung 5 ein zweiter, nicht gezeigter Sensor zuordnet ist, wobei der Dichtstreifen-Verbindungsmarker über den ersten, nicht gezeigten Sensor vor der nächsten Dichtstreifen-Anordnung ein Wegschwenken der Applikationseinrichtung 5 vom Flansch 2 der Schiebedachöffnung 3 bewirkt und der Verbindungsmarker über den zweiten, nicht gezeigten Sensor die Schneideinrichtung aktiviert zum Abtrennen des durch die Verbindungsstelle für eine Applikation ungeeigneten Dichtstreifenabschnittes.

## Patentansprüche

1. Arbeitsverfahren zur Anordnung eines Dichtstreifens an einem Flansch einer Schiebedachöffnung oder ähnlichen Karosserieöffnungen,
- wobei der Dichtstreifen (1) mittels Relativbewegung zwischen Flansch (2) und einer Applikationseinrichtung (5) durch die automatisch durchgeführten Vorgänge Zuführen, Positionieren, Andrücken und Ablängen des auf einer Vorratsrolle (6) bevorrateten Dichtstreifens (1) auf dem Flansch (2) angeordnet wird, wobei
- die an einem Gestell (7) der Applikations-Vorrichtung (9) relativ zum Flansch (2) höheneinstellbar angeordnete und mit einer Andrückrolle (10) ausgerüstete Applikationseinrichtung (5) zum Positionieren des Dichtstreifens (1) gesteuert vom Flansch (2) beabstandet angeordnet wird,
**dadurch gekennzeichnet**,
- daß der zugeführte, auf eine Schutzabdeckung (22) geklebte Dichtstreifen (1) im Nahbereich der Andrückrolle (10) gesteuert erfaßt wird und auf einem Umfangsabschnitt der Andrückrolle (10) bis zum Erreichen ihrer Andrückposition am Flansch (2) der Schiebedachöffnung (3) aufgelegt wird, und
- daß der mittels der anschließend motorisch relativ zum Flansch (2) bewegten Applikationseinrichtung (5) angeordnete Dichtstreifen (1) von der Schutzabdeckung (22) getrennt wird, und in verrundeten Öffnungsabschnitten auf dem Flansch (2) durch Stauchen des Dichtstreifens (1) angeordnet wird, ferner
- daß der Dichtstreifen (1) mit Erreichen des Dichtstreifen-Anfanges durch die Applikationseinrichtung (5) signalgesteuert auf Länge abgeschnitten wird, wobei
- die Stoßstelle des Dichtstreifens (1) überrollt und anschließend der auf dem Flansch (2) angeordnete Dichtstreifen (1) durch die rückwärts bewegte Applikationseinrichtung (5) über den Schiebedach-Öffnungsumfang bis zum Ausgangspunkt der ersten Andrückposition mit erhöhtem Anpreßdruck nachgerollt wird.

2. Vorrichtung zur Durchführung des Arbeitsverfahrens nach Anspruch 1,
- **gekennzeichnet durch** einen zur Schiebedachöffnung (3) ausrichtbaren Rahmen (11) zur Führung eines gesteuert angetriebenen Fahrwagens (12), der
- mit dem Gestell (7) zur gesteuert schwenkbeweglichen Anordnung der Applikationseinrichtung (5) quer zum Flansch (2) ausgerüstet ist, wobei
- Gestell (7) und Applikationseinrichtung (5) über eine einstellbare Gegengewichtskraft (8) gewichtsreduziert mittels einer im Randbereich der Schiebedachöffnung (3) auf der Karosserie (4) aufgesetzten Tastrolle (13) gesteuert höhenbeweglich am Fahrwagen (12) angeordnet sind und
- ferner zwischen Tastrolle (13) und Gestell (7) eine relative Höheneinstelleinrichtung (14) angeordnet ist.

3. Vorrichtung nach Anspruch 2, **dadurch gekennzeichnet**,
- daß der Rahmen (11) oberhalb der Karosserie (4) absenkbar angeordnet ist, und Anschlagelemente (15, 16) aufweist, die den Rahmen (11) auf der Karosserie (4) über Stützen (17) kraft-oder reibschlüssig positionieren, wobei die Anschlagelemente (15) nach der Rahmen-Positionierung aus dem Bewegungsbereich des Fahrwagens (12) gesteuert entfernt werden.

4. Vorrichtung nach Anspruch 2 und 3, **dadurch gekennzeichnet**,
- daß die Applikationseinrichtung (5) in Andrückposition über eine den Flansch (2) der Schiebedachöffnung (3) untergreifende Führungsrolle (19) der Dachwölbung über eine Kipplagerung nachgeführt ist und
- daß der selbstklebende Dichtstreifen (1) mit seiner Schutzabdeckung (22) über die Tastrolle (13) relativ zum Rand der Schiebedachöffnung (3) ausgerichtet und mittels der Andrückrolle (10) auf dem Flansch (2) plaziert ist, wobei
- der von einer Vorratsrolle (6) mittels diametral angeordneter Förderrollen (20, 21) der Andrückrolle (10) zugeführte Dichtstreifen (1) über eine dem Abziehen der Schutzabdeckung (22) dienende Umlenkrolle (23) geführt ist, und
- die Schutzabdeckung (22) über eine Abzugsrolle (24) einem Absaugrohr (25) zur Abfallsammlung zugeführt ist.

5. Vorrichtung nach den Ansprüchen 2 bis 4, **dadurch gekennzeichnet**,
- daß die Applikationseinrichtung (5) in Fahrtrichtung des Dichtstreifen-Auftrages von der Andrückrolle (10) beabstandet einen Sensor aufweist zur Erfassung des Dichtstreifen-Anfanges gegen Auftragsende, wobei
- der Sensor zum Ablängen des Dichtstreifens (1) eine zwischen der Umlenkrolle (23) und der Andrückrolle (10) angeordnete Schneideinrichtung aktiviert.

6. Vorrichtung nach Anspruch 4 oder 5, **dadurch gekennzeichnet**,
- daß die Vorratsrolle (6) von der Applikations-Vorrichtung (9) baulich getrennt in einem Speicher (26) ortsfest angeordnet ist und
- der von der Vorratsrolle (6) ablaufende Dichtstreifen (1) mittels zumindest einer Umschlingung (27) zweier beabstandet angeordneter Rollen (28, 29) entsprechend der für eine Schiebedachöffnung (3) erforderlichen Länge in einem Längenpuffer (30) gepuffert ist, und
- der Dichtstreifen (1) anschließend über eine die Fahrbewegungen der Applikationseinrichtung (5) ausgleichende Spannrolle (31) der Applikationseinrichtung (5) zugeführt ist.

7. Vorrichtung nach Anspruch 6, **dadurch gekennzeichnet**,
- daß der Speicher (26) zwischen der Vorratsrolle (6) und dem Längenpuffer (30) eine zum Fixieren des Dichtstreifens (1) dienende Klemmeinrichtung (32) aufweist, wobei
- das geklemmt fixierte, vorratsrollenseitige Ende des Dichtstreifens (1) mit dem Anfang des Dichtstreifens (1) einer ausgetauschten, vollen Vorratsrolle (6) fest verbunden und durch einen Farbstreifen bestimmt ist, wobei
- während der Dichtstreifen-Verbindung bei aktiver Applikationseinrichtung (5) aus dem Längenpuffer (30) über zumindest eine der verschiebebeweglich angeordneten Rollen (28, 29) eine Dichtstreifenlänge entnommen ist.

8. Vorrichtung nach Anspruch 7, **dadurch gekennzeichnet**,
- daß die Applikationseinrichtung (5) einen in der Zuführung des Dichtstreifens (1) vorgesehenen ersten Sensor umfaßt, dem
- im Abstand der Dichtstreifenlänge zwischen der Schneideinrichtung und der Andrückrolle (10) der Applikationseinrichtung (5) ein zweiter Sensor zugeordnet ist, wobei
- der Dichtstreifen-Verbindungs-Farbstreifen über den ersten Sensor vor der nächsten Dichtstreifen-Anordnung ein Wegschwenken der Applikationseinrichtung (5) vom Flansch (2) der Schiebedachöffnung (3) bewirkt, und
- der Farbstreifen über den zweiten Sensor die Schneideinrichtung aktiviert zum Abtrennen des durch die Verbindungsstelle für eine Applikation ungeeigneten Dichtstreifenabschnittes.

## Claims

1. A method of operation for installing a sealing strip on a flange of a sliding-roof opening or similar opening in a car body,
- wherein the sealing strip (1) is installed on the flange (2) by relative motion between the flange (2) and an application device (5) via the automatic processes of supplying, positioning, pressing and cutting to length the sealing strip (1) stored on a supply roller (6), wherein
- the application device (5), which is vertically adjustable relative to the flange (2) on a stand (7) of the application means (9), is disposed in controlled manner at a distance from the flange (2) in order to position the sealing strip (1),
**characterised in that**
- the supplied sealing strip (1), stuck to a protective cover (22), is detected in controlled manner in the near region of the pressure roller (10) and placed on a peripheral portion of the pressure roller (10) until it reaches its pressed position on the flange (2) of the sliding-roof opening (3), and
- the sealing strip (1) installed by the application device (5), which is subsequently mechanically moved relative to the flange (2), is separated from the protective cover (22) and installed in rounded opening portions on the flange (2) by compressing the sealing strip (1), and
- the sealing strip (1), when the beginning thereof is reached, is cut to length by the application device (5), controlled by a signal, wherein
- the joint area of the sealing strip (1) is rolled over and subsequently the sealing strip (1) disposed on the flange (2) is rolled back at greater contact pressure by the backwardly moved application device (5) over the periphery of the sliding-roof opening back to the starting point of the first pressure position.

2. A device for working the method according to claim 1,
- **characterised by** a frame (11), alignable relative to the sliding-roof opening (3), for guiding a carriage (12) which is driven in controlled manner and
- is equipped with the stand (7) for controlled pivotable arrangement of the application device (5) transversely to the flange (2), wherein
- the stand (7) and the application device (5), their weights reduced by an adjustable counterweight (8), are disposed on the carriage (12) so as to be vertically movable in controlled manner by a feeler roll (13) mounted on the body (4) in the edge region of the sliding roof opening (3), and
- a relative height adjustment device (14) is disposed between the feeler roll (13) and the stand (7).

3. A device according to claim 2, **characterised in that**
- the frame (11) is lowerable over the body (4) and has abutment elements (15, 16) which non-positively or frictionally position the frame (11) on the body (4) via supports (17), wherein the abutment elements (15) are removed in controlled manner from the area travelled by the carriage (12) after the frame has been positioned.

4. A device according to claim 2 or claim 3, **characterised in that**
- in the pressure position the application device (5) is made to follow the roof curvature by a tilting bearing via a guide roller (19) which grips under the flange (2) of the sliding roof opening (3), and
- the self-adhesive sealing strip (1) and its protective cover (22) are aligned by the feeler roll (13) relative to the edge of the sliding roof opening (3) and positioned on the flange (2) by the pressure roller (10), wherein
- the sealing strip (1) supplied to the pressure roller (10) from a supply roller (6) by diametrically disposed delivery rollers (20, 21) is guided over a guide pulley (23) for pulling off the protective cover (22), and
- the protective cover (22) is conveyed by a pull-off roller (24) to a suction pipe (25) for waste collection.

5. A device according to claims 2 to 4, **characterised in that**
- the application device (5) has a sensor at a distance from the pressure roller (10) in the direction of travel of application of the sealing strip, for detecting the beginning of the sealing strip towards the end of application, wherein
- the sensor activates a cutting device disposed between the guide pulley (23) and the pressure roller (10) for cutting the sealing strip (1) to length.

6. A device according to claim 4 or claim 5, **characterised in that**
- the supply roller (6) is separated from the application device (9) and disposed in stationary manner in a storage means (26), and
- the sealing strip (1) running off the supply roller (6) is buffered in a length buffer (30) in accordance with the length required for a sliding roof opening (3), via at least one loop (27) between two spaced-apart rollers (28, 29), and
- the sealing strip (1) is then supplied to the application device (5) by a tension roller (31) which compensates the motion of the application device (5).

7. A device according to claim 6, **characterised in that**
- the storage means (26) has a clamping device (32) for fixing the sealing strip (1) between the supply roller (6) and the length buffer (30), wherein
- the clamped, fixed end of the sealing strip (1) on the supply-roller side is firmly connected to the beginning of the sealing strip (1) from a full substituted supply roller (6) and marked by a colour strip, wherein
- if the application device (5) is operative while a connection is being made between sealing strips, a length of sealing strip is taken from the length buffer (30) via at least one of the movably disposed rollers (28, 29).

8. A device according to claim 7, **characterised in that**
- the application device (5) comprises a first sensor provided in the sealing-strip (1) feed means, and
- associated with a second sensor at a distance from the length of sealing strip between the cutting device and the pressure roller (10) of the application device (5), wherein
- before the next sealing strip is installed, the sealing strip-connecting colour strip, via the first sensor, swings the application device (5) away from the flange (2) of the sliding roof opening (3), and
- the colour strip, via the second sensor, activates the cutting device for cutting the part of the sealing strip which is unsuitable for use owing to the joint area.

## Revendications

1. Procédé de fixation d'une bande d'étanchéité sur un rebord d'une ouverture de toit ou d'une ouverture de carrosserie similaire dans lequel :
- la bande d'étanchéité (1), par un mouvement relatif du rebord (2) et d'un applicateur (5) est placée sur le rebord (2) avec exécution automatique des opérations d'amenée, de positionnement, de pressage et de coupe à longueur sur le rebord (2) de la bande d'étanchéité (1) issue d'un rouleau d'alimentation (6),
- sur un bâti (7) de l'ensemble d'application (9), est monté réglable en hauteur par rapport au rebord (2) et équipé d'un rouleau presseur (10), un applicateur (5) servant à positionner la bande (1) et dont la distance par rapport au rebord (2) est commandée,
**caractérisé en ce que**
- la bande d'étanchéité (1), collée sur une pellicule de protection et amenée à proximité du rouleau presseur (10), est saisie de manière commandée et appliquée sur une partie de la périphérie du rouleau presseur (10) jusqu'à ce qu'elle atteigne sa position de collage sur le rebord (2) de l'ouverture de toit (3),
- ensuite, par déplacement motorisé de l'applicateur (5) par rapport au rebord (2), la bande d'étanchéité placée est séparée de sa pellicule de protection (22), et montée en compression dans les parties arrondies de l'ouverture,
- la bande d'étanchéité (1), lorsqu'elle rejoint son début, est coupée à longueur par l'applicateur (5), par l'effet d'un signal de commande,
- le point d'aboutissement de la bande d'étanchéité (1) est soumis à un roulage et ensuite la bande d'étanchéité (1) montée sur le rebord (2) est soumise à un roulage final à pression élevée, produit par le dispositif d'application (5) se déplaçant en arrière en suivant la périphérie de l'ouverture du toit jusqu'à rejoindre le point de départ de la première position de collage.

2. Dispositif pour la mise en oeuvre du procédé de la revendication 1,
**caractérisé en ce qu'**
- il comporte un cadre (11) qui peut être orienté vers l'ouverture de toit (3), pour guider un chariot mobile (12) à entraînement commandé,
- le chariot (12) est équipé d'une monture (7) servant à placer par basculement commandé le dispositif d'application (5) perpendiculairement au rebord (2),
- le bâti (7) et le dispositif applicateur (5), dont le poids global est réduit par une force d'opposition réglable (8), sont montés sur le chariot (12) avec réglage en hauteur commandé par un rouleau de contact (13) posé sur la carrosserie (4) dans la zone marginale de l'ouverture de toit (3),
- entre le rouleau de contact (13) et le bâti (7) est intercalé un dispositif (14) de réglage de leur hauteur relative.

3. Dispositif selon la revendication 2,
**caractérisé en ce que**
le cadre (11) est placé, avec possibilité de descendre, au-dessus de la carrosserie (4) et porte des éléments de butée (15, 16) qui positionnent par force ou par friction le cadre (11) sur la carrosserie (4) par l'intermédiaire d'appuis (17), et une fois le positionnement du cadre effectué, une commande écarte les éléments de butée (15) de la zone de déplacement du chariot mobile (12).

4. Dispositif selon l'une quelconque des revendications 2 ou 3,
**caractérisé en ce que**
- l'applicateur (5), en position de pressage, peut basculer dans un palier pour suivre la courbure du toit en étant guidé par un galet de guidage (19) en prise par-dessous le rebord (2) de l'ouverture de toit (3),
- la bande d'étanchéité (1) autocollante, portant sa pellicule de protection (22) est orientée par le rouleau de contact (13) par rapport au bord de l'ouverture de toit (3) et placée sur le rebord (2) par le rouleau presseur (10),
- la bande d'étanchéité (1) issue du rouleau d'alimentation (6) et amenée par des rouleaux d'avancement (20, 21) en appui l'un sur l'autre, au rouleau presseur (10), passe sur un rouleau de renvoi (23) servant à séparer par traction la pellicule de protection (22),
- la pellicule de protection (22) est amenée par un rouleau de tirage (24) à un tube d'aspiration (25) aboutissant à un collecteur de déchets.

5. Dispositif selon l'une quelconque des revendications 2 à 4,
**caractérisé en ce que**
- l'applicateur (5) présente, à une certaine distance du rouleau presseur (10) dans le sens du dépôt de la bande d'étanchéité, un détecteur pour percevoir le début de la bande d'étanchéité par rapport à la fin du dépôt,
- le détecteur active un dispositif de coupe situé entre le rouleau de renvoi (23) et le rouleau presseur (10), pour couper à longueur la bande d'étanchéité (1).

6. Dispositif selon l'une quelconque des revendications 4 ou 5,
**caractérisé en ce que**
- le rouleau d'alimentation (6) distinct dans sa construction du dispositif d'application (9) est monté fixe dans un magasin (26),
- la bande d'étanchéité (1) issue du rouleau d'alimentation (6) en effectuant au moins une boucle (27) sur deux rouleaux (28, 29) espacés l'un de l'autre en correspondance avec la longueur de bande nécessaire à une ouverture de toit (3), est accumulée dans un tampon de longueur (30),
- la bande d'étanchéité (1) passe ensuite sur un rouleau de tension (31) de l'applicateur (5), compensant les mouvements de déplacement de l'applicateur (5).

7. Dispositif selon la revendication 6,
**caractérisé en ce que**
- le magasin (26) présente, entre le rouleau d'alimentation (6) et le tampon de longueur (30), un dispositif de serrage (32) servant à fixer la bande d'étanchéité (1),
- la fin, côté alimentation, de la bande d'étanchéité (1), fixée par serrage est reliée solidement au début de la bande d'étanchéité (1) issue d'un rouleau d'alimentation (6) plein, échangé, et elle est définie par une bande de couleur,
- pendant que s'opère la liaison des bandes d'étanchéité dans l'appareil d'application (5) en activité, une longueur de bande d'étanchéité est retirée du tampon de longueur (30) par au moins un des rouleaux (28, 29) mobiles par coulissement.

8. Dispositif selon la revendication 7,
**caractérisé en ce que**
- l'applicateur (5) comprend, sur l'arrivée de la bande d'étanchéité (1),un premier détecteur,
- à ce premier détecteur est associé un second détecteur placé entre le dispositif de coupe et le rouleau presseur (10) de l'applicateur (5),
- la bande colorée signalant la liaison des bandes d'étanchéité provoque, par l'intermédiaire du premier détecteur, avant le prochain collage des bandes d'étanchéité, un basculement de l'appareil d'application (5), l'écartant du rebord (2) de l'ouverture de toit (3),
- la bande colorée, par l'intermédiaire du deuxième détecteur active le dispositif de coupe afin de séparer le morceau de bande d'étanchéité qui, du fait de la présence du point de liaison, n'a pas lieu d'être appliqué.
